(19) Europäisches Patentamt
European Patent Office
Office européen des brevets

(11) **EP 3 033 816 B1**

(12) **EUROPÄISCHE PATENTSCHRIFT**

(45) Veröffentlichungstag und Bekanntmachung des Hinweises auf die Patenterteilung:
**25.07.2018  Patentblatt 2018/30**

(21) Anmeldenummer: **14750164.7**

(22) Anmeldetag: **01.08.2014**

(51) Int Cl.:
*F03D 7/04* (2006.01)     *H02J 3/38* (2006.01)
*H02J 3/12* (2006.01)     *H02J 3/18* (2006.01)
*F03D 9/25* (2016.01)

(86) Internationale Anmeldenummer:
**PCT/EP2014/066615**

(87) Internationale Veröffentlichungsnummer:
**WO 2015/022206 (19.02.2015 Gazette 2015/07)**

(54) **VERFAHREN ZUM EINSPEISEN ELEKTRISCHER LEISTUNG IN EIN VERSORGUNGSNETZ**

METHOD FOR FEEDING ELECTRIC POWER INTO A SUPPLY GRID

PROCÉDÉ PERMETTANT D'INJECTER DE L'ÉNERGIE ÉLECTRIQUE DANS UN RÉSEAU D'ALIMENTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **15.08.2013   DE 102013216241**

(43) Veröffentlichungstag der Anmeldung:
**22.06.2016   Patentblatt 2016/25**

(73) Patentinhaber: **Wobben Properties GmbH**
**26607 Aurich (DE)**

(72) Erfinder:
• **BEEKMANN, Alfred**
**26639 Wiesmoor (DE)**
• **BUSKER, Kai**
**26629 Großefehn (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
DE-A1-102004 060 943     DE-A1-102010 006 142
DE-A1-102011 084 910     US-A1- 2012 136 494

**Beschreibung**

Die vorliegende Erfindung betrifft ein Verfahren zum Einspeisen elektrischer Leistung mittels eines Windparks in ein elektrisches Versorgungsnetz. Außerdem betrifft die vorliegende Erfindung einen Windpark der ein solches Verfahren durchführt bzw. dazu vorbereitet ist, ein solches Verfahren durchzuführen.

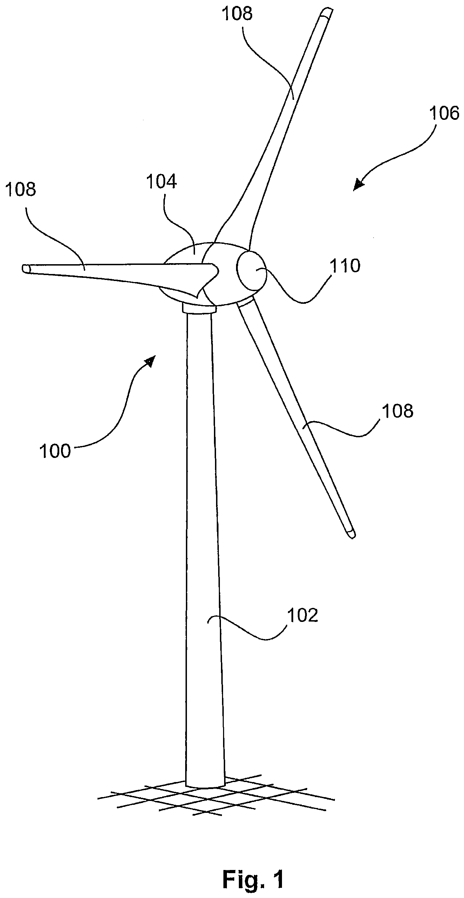

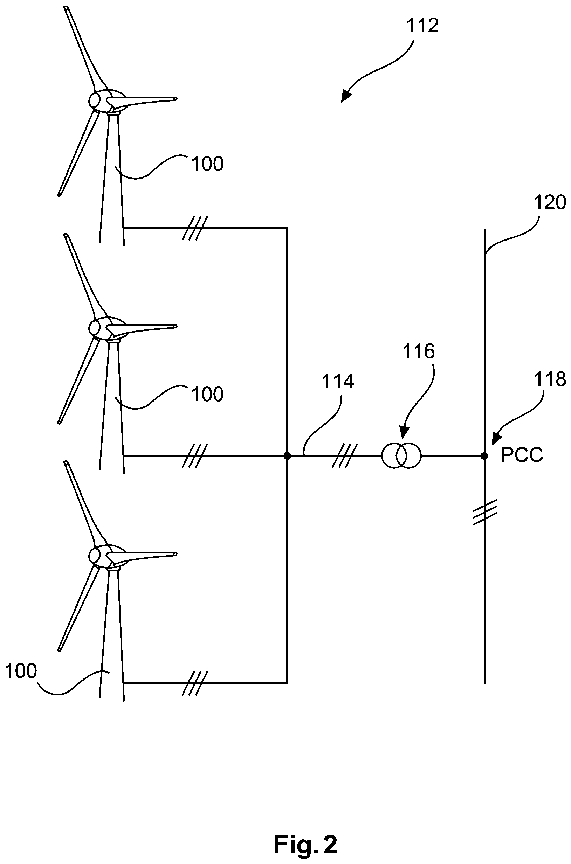

Es ist bekannt, mittels eines Windparks elektrische Leistung in ein Versorgungsnetz einzuspeisen. Dabei wird grundsätzlich von einem Windpark, wie schematisch in Figur 2 dargestellt, ausgegangen, der mehrere Windenergieanlagen gemäß der schematischen Figur 1 umfasst.

Für einen solchen Windpark ist auch bekannt, diesen zum Stützen des Versorgungsnetzes, in das er einspeist, zu verwenden. Ein Windpark wird also nicht nur derart betrieben, dass er maximale Leistung in das Versorgungsnetz einspeist, sogenannter Netzparallelbetrieb, sondern dass er auch seine Einspeisung nach Art und Menge ggf. so anpassen, dass das Versorgungsnetz gestützt werden kann. Ein solches Verfahren ist bspw. aus der US-Anmeldung 10/490,896 bekannt.

Heutzutage werden Windparks zunehmend auch zur Netzstützung eingesetzt. Obgleich dieser Trend grundsätzlich zu begrüßen ist, besteht die Gefahr, dass viele einspeisende und stabilisierend arbeitende Windparks in einem Versorgungsnetz in einer ungünstigen Konstellation gegeneinander arbeiten könnten und die Möglichkeit eines Schwingverhaltens besteht. Grundsätzlich besteht eine solche Gefahr auch im Verhältnis zu anderen dezentralen Erzeugern im Versorgungsnetz, die einen Beitrag zur Stabilisierung liefern möchten.

Das deutsche Patent- und Markenamt hat in der Prioritätsanmeldung folgenden Stand der Technik recherchiert: DE 10 2009 030 725 A1, EP 1 802 866 B1 und EP 2 551 984 A2.

Die DE 10 2011 081 446 A1 offenbart ein Verfahren zum Einspeisen von Energie einer Windkraftanlage in ein Netzwerk mit Messpunkten.

Der vorliegenden Erfindung liegt somit die Aufgabe zugrunde, zumindest eines der genannten Probleme zu adressieren. Insbesondere soll eine Lösung geschaffen werden, die einen Beitrag zur Stabilitätserhöhung oder zumindest Stabilitätsbeibehaltung eines elektrischen Versorgungsnetzes ermöglicht. Zumindest soll eine alternative Lösung vorgeschlagen werden.

Erfindungsgemäß wird ein Verfahren gemäß Anspruch 1 vorgeschlagen. Demnach speist ein Windpark elektrische Leistung in ein elektrisches Versorgungsnetz ein. Der Windpark speist von einem Verbindungsnetz über einen Transformator in das Versorgungsnetz ein. Dabei weist das Verbindungsnetz eine Verbindungsnetzspannung und das Versorgungsnetz eine Versorgungsnetzspannung auf. Das Verbindungsnetz kann bspw. auch ein Parknetz sein, das die Windenergieanlagen des Windparks verbindet. Der Transformator kann den Einspeisepunkt bilden bzw. am Einspeisepunkt angeordnet sein, über den der Windpark in das elektrische Versorgungsnetz einspeist.

Das Einspeisen erfolgt in Abhängigkeit einer virtuellen Messspannung. Beim Einspeisen wird somit, zumindest für einige Aspekte, auf diese virtuelle Messspannung referenziert. Als virtuelle Messspannung wird eine Spannung eines virtuellen Messpunktes berechnet. Demnach wird ein virtueller Messpunkt festgelegt, der vorzugsweise in einer Leitung des Versorgungsnetzes, einer Leitung des Verbindungsnetzes oder in dem Transformator liegt, und über Kenntnis der Topologie wird die Spannung an diesen virtuellen Messpunkt berechnet.

Es wird also an einer Stelle gemessen, bspw. im Verbindungsnetz am Transformator. Außerdem wird ein virtueller Messpunkt festgelegt, der insbesondere an einem gewünschten Punkt im Versorgungsnetz oder auch an einem gewünschten Punkt im Transformator liegen kann. Es kann der virtuelle Messpunkt auch in einer Verbindungsleitung zwischen dem Transformator und dem Versorgungsnetz liegen. Aus den am tatsächlichen Messpunkt gemessenen Werten wird dann eine Spannung am virtuellen Messpunkt berechnet, die damit die virtuelle Spannung darstellt. Diese so berechnete virtuelle Messspannung wird dann dem Einspeisen elektrischer Leistung in das Versorgungsnetz zugrundegelegt.

Hierdurch wird erreicht, dass an einem gewünschten Punkt, nämlich dem virtuellen Messpunkt, die Spannung erfasst wird. Ein Vorteil bei diesem Vorgehen ist, dass eine zumindest teilweise Entkopplung der eigentlichen Spannungsmessung stattfindet. Die virtuelle, also berechnete Spannung ist weniger von anderen Einspeisern abhängig. Probleme, die durch, z.T. nur minimale, Messabweichungen, besonders im Zusammenhang mit Reglern mit I-Anteil auftreten können, werden hierdurch vermieden.

In dem genannten Beispiel kann in dem Verbindungsnetz, also bspw. im Parknetz, gemessen werden und gleichwohl ein Spannungswert im Versorgungsnetz an einer gewünschten Stelle zugrundegelegt werden kann. Im Übrigen wird für jede beschriebene Ausführungsform als eine Möglichkeit vorgeschlagen, dass das Versorgungsnetz ein Parknetz ist.

Gemäß einer Ausführungsform wird vorgeschlagen, dass der virtuelle Messpunkt in den Transformator gelegt wird. Insbesondere ist dort mit einem stabilen Spannungswert bei diesem Vorgehen zu rechnen. Das Einspeisen kann auf diesen stabilen Spannungswert referenziert werden und dadurch kann auch eine höhere Stabilität der Einspeisung und damit letztlich des Versorgungsnetzes erreicht werden. Insbesondere wird ein solcher virtueller Messpunkt im Transformator von einem anderen Windpark nicht verwendet werden. Dadurch kann vermieden werden, dass bspw.

zwei Windparks in einem identischen Punkt oder zumindest an einer identischen Stelle die Spannung regeln wollen und dadurch gegeneinander arbeiten könnten. Ein gegeneinander Arbeiten dieser beispielhaft genannten beiden Windparks beim Regeln derselben Spannung wird somit vermieden.

Vorzugsweise speist der Windpark von einem Mittelspannungsnetz in ein Hochspannungsnetz, so dass also das Verbindungsnetz ein Mittelspannungsnetz ist und somit die Verbindungsnetzspannung eine Mittelspannung ist, und dass Versorgungsnetz ein Hochspannungsnetz ist, die Versorgungsnetzspannung also ein Hochspannung ist. Hierbei greift somit der Windpark beim Einspeisen in dieses Hochspannungsnetz an einer vergleichsweise hohen Netzebene an. Entsprechend groß ist auch die Reichweite der Einspeisung auf diese hohe Netzebene.

Eine Hochspannung liegt hierbei meist bei 110kV, wobei dies auch länderspezifisch etwas anders definiert sein kann. Eine Mittelspannung liegt etwa in einem Bereich von 1 bis 50kV. Auch hier kann die Definition länderspezifisch etwas anders ausfallen.

Gemäß einer Ausführungsform wird vorgeschlagen, dass der virtuelle Messpunkt in dem Transformator auf einen vorbestimmten Nennwert gelegt wird. Dieser kann vorzugsweise im Bereich von etwa 20kV liegen.

Wenn bspw. in einem 20kV Netz gemessen wird und der Transformator auf 110kV hochsetzt, wird die virtuelle Spannung relativ zur gemessenen Spannung berechnet. Als Beispiel könnte sich die virtuelle Spannung aus der gemessenen Spannung 20,2kV berechnen, zuzüglich einer Spannungsdifferenz, nämlich bspw. als Berechnung der virtuellen Transformator-Anzapfung von 0,7kV. Somit beträgt die virtuelle Spannung in diesem Beispiel 20,9kV. Ein hier verwendeter Spannungsregler arbeitet jetzt mit einer virtuellen Spannung von 20,9kV und einer Sollspannung in dem genannten Beispiel 20kV.

Gemäß einer Ausführungsform wird die virtuelle Messspannung am virtuellen Messpunkt aus einer gemessenen Spannung, der momentan eingespeisten Leistung und der momentan eingespeisten Blindleistung berechnet und dabei der entsprechende Widerstand und die entsprechende Reaktanz berücksichtigt, die zwischen dem tatsächlichen Messpunkt und dem virtuellen Messpunkt liegt.

Je nach Wahl des virtuellen Messpunktes kann dies auch der Widerstand und die Reaktanz einer Leitung sein, die zwischen dem tatsächlichen Messpunkt und dem virtuellen Messpunkt liegt. Ggf. kommt der Widerstand und die Reaktanz des Transformators hinzu. Ggf. kann die Berücksichtigung nur des Widerstandes oder nur der Reaktanz ausreichen, wenn eines von beiden vernachlässigt werden kann.

Als Messwerte können aber auch andere Werte zusätzlich oder alleine in Betracht kommen, wie bspw. ein Strom des Transformators, aus dem sich ggf. auch die Leistung und/oder die Blindleistung ableiten lassen.

Im Übrigen kann bei der Messung und Berechnung jeweils ein Effektivwert zugrundegelegt werden. Vorzugsweise wird aber zumindest für die gemessene Spannung und/oder die berechnete virtuelle Spannung jeweils ein komplexer Wert verwendet werden, also ein Spannungswert jeweils nach Betrag und Phase. Soweit der Strom berücksichtigt wird, kann auch dieser als komplexer Wert, also nach Betrag und Phase berücksichtigt werden. Dadurch lässt sich ggf. auch Wirk- und Blindleistung bestimmen. Es wird darauf hingewiesen, dass soweit von eingespeister Leistung die Rede ist, dies eingespeiste Wirkleistung bedeutet.

Gemäß einer Ausführungsform wird vorgeschlagen, dass abhängig von der virtuellen Messspannung die eingespeiste Leistung und/oder die eingespeiste Blindleistung verändert wird. Somit wird eine spannungsabhängige Leistungsregelung und/oder eine spannungsabhängige Blindleistungsregelung vorgeschlagen, die auf die virtuelle Messspannung referenziert.

Erfindungsgemäß wird zudem ein Windpark vorgeschlagen, der gemäß wenigstens einer der oben beschriebenen Ausführungsformen die Einspeisung elektrischer Leistung in einer Versorgungsnetz durchführt, bzw. zu einer solchen Durchführung vorbereitet ist. Zu einer solchen Vorbereitung gehört dabei insbesondere, dass der Windpark eine entsprechende Steuereinheit aufweist, die die Einspeisung der Leistung an einem Einspeisepunkt, insbesondere an dem Transformator steuert, und/oder die entsprechende Messwerte für eine Messspannung und ggf. eingespeiste Wirk- und Blindleistung auswerten kann. Außerdem oder alternativ ist diese oder eine weitere Steuereinheit oder Recheneinheit vorgesehen, die die Berechnung der virtuellen Messspannung vornehmen kann. Insbesondere weist eine solche Steuereinheit, insbesondere eine Parksteuereinheit, einen entsprechenden Mikroprozessor auf.

Nachfolgend wird die Erfindung anhand von Ausführungsbeispielen exemplarisch unter Bezugnahme auf die begleitenden Figuren näher erläutert.

Figur 1          zeigt schematisch eine Windenergieanlage in einer perspektivischen Ansicht.

Figur 2          zeigt schematisch einen Windpark.

Figuren 3 und 4   zeigen jeweils schematisch einen Teil eines Versorgungsnetzes einschließlich eines gemeinsamen Anschlusspunktes sowie ein Ersatzschaltbild dazu.

Figur 5          zeigt schematisch einen Berechnungsoperator zum Veranschaulichen der Berechnung einer virtuellen Spannung.

Figuren 6 bis 8     zeigen drei mögliche Konstellationen eines angeschlossenen Windparks mit unterschiedlichen virtuellen Messpunkten.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

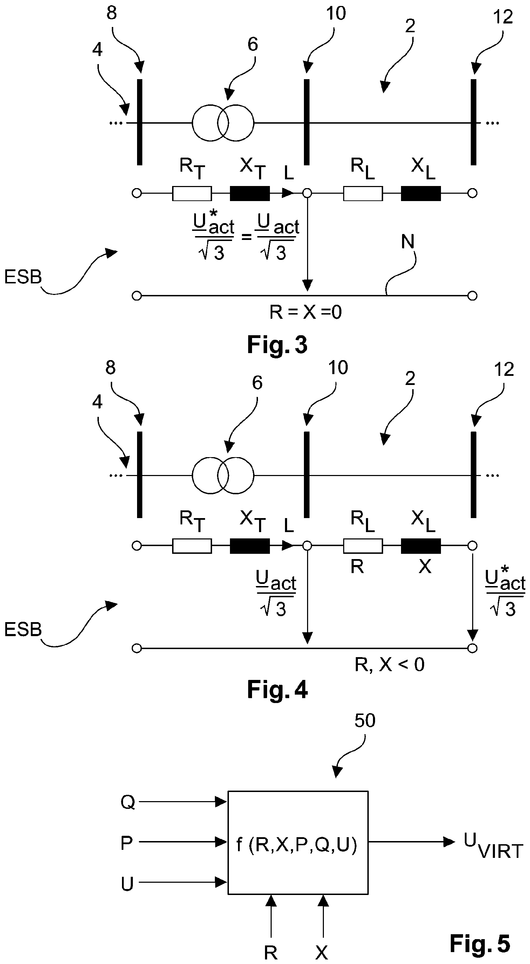

Figur 3 zeigt in ihrem oberen Teil einen Ausschnitt aus einem Netz mit Einspeisepunkt, nämlich ein elektrisches Versorgungsnetz 2, ein angedeutetes Verbindungsnetz 4 und einen Transformator 6 zum Hochtransformieren einer elektrischen Spannung in dem Verbindungsnetz 4, also einer Verbindungsnetzspannung, auf eine Spannung in dem Versorgungsnetz 2, also eine Versorgungsnetzspannung. Weiterhin sind drei Messstellen oder Messpunkte angedeutet, nämlich ein Parkmesspunkt 8, ein Netzmesspunkt 10 und ein virtueller Messpunkt 12. Der Parkmesspunkt 8, der auch als parkseitiger Messpunkt bezeichnet werden kann, ist in dem Verbindungsnetz 4, das hier auch das Parknetz 4 bildet, unmittelbar vor dem Trafo 6 angeordnet. Der Netzmesspunkt 10, der auch als netzseitiger Messpunkt bezeichnet werden kann, ist im Versorgungsnetz 2 unmittelbar am Trafo 6 angeordnet. Aus Sicht des Parknetzes bzw. Verbindungsnetzes 4 ist der Netzmesspunkt 10 somit hinter dem Trafo 6 angeordnet. Der virtuelle Messpunkt 12 ist im Grunde an einem beliebigen Punkt im Versorgungsnetz 4 angeordnet, insbesondere in einer deutlichen Entfernung zum Netzmesspunkt 10. Der virtuelle Messpunkt ist ein Punkt im Versorgungsnetz an einer Position, an der die elektrische Spannung von Interesse ist, insbesondere für eine sich darauf stützende Regelung von Interesse ist. Die Figur 3 - und ebenso die Figur 4 - zeigen den virtuellen Messpunkt 12 in dem Versorgungsnetz 2. Es kommt aber auch für den virtuellen Messpunkt eine Position in dem Transformator 6 in Betracht.

Der Netzmesspunkt 10 oder der Transformator 6 als solcher, können als gemeinsamer Einspeisepunkt (PCC) bezeichnet werden.

Figur 3 zeigt außerdem zu dem dargestellten Netzabschnitt einschließlich Einspeisepunkt ein Ersatzschaltbild ESB. Für den Transformator 6 stellen der Widerstand $R_T$ und die Reaktanz $X_T$ die Ersatzbauteile dar. Die Ersatzbauteile $R_L$ und $X_L$ repräsentieren die Eigenschaft des Versorgungsnetzes 2 für den Abschnitt vom Netzmesspunkt 10 bis zum virtuellen Messpunkt 12. An dem Netzmesspunkt 10 ergibt sich eine momentane Leiterspannung $\underline{U}_{act}$, die in den Ersatzschaltbild ESB als Strangspannung $\underline{U}_{act}/\sqrt{3}$ gegen den Nullleiter N angegeben ist. Außerdem fließt ein Strom $\underline{I}$. Insoweit werden hier komplexe Werte für Strom und Spannung verwendet. Figur 3 veranschaulicht den Fall, dass der virtuelle Messpunkt dem tatsächlichen Messpunkt, hier also dem Netzmesspunkt 10 entspricht. Die virtuelle Messspannung ist hier angegeben als $\underline{U}^*_{act}$. Da hier die Messspannung und die virtuelle Spannung identisch sind gilt:

$$\underline{U}^{*}_{act} = \underline{U}_{act}$$

Mathematisch kann dies auch so ausgedrückt werden, dass die Ersatzwerte R und X den Wert 0 aufweisen:

$$R = X = 0\,.$$

Figur 4 veranschaulicht den Fall, dass der virtuelle Messpunkt 12 in dem Versorgungsnetz 2 in einem deutlichen Abstand vom Netzmesspunkt 10 angeordnet ist. Für diesen Fall kann die virtuelle Spannung $\underline{U}^*_{act}$ aus der gemessenen Spannung $\underline{U}_{act}$ unter Zuhilfenahme des Widerstandes $R_L$ und der Reaktanz $X_L$ des Versorgungsnetzes 2 berechnet werden. In der Berechnung werden diese Parameter des Ersatzschaltbildes ESB des Versorgungsnetzes 2 der Einfachheit halber ohne Index verwendet. In der nachfolgenden Gleichung beschreiben R und X somit den Widerstand bzw. die Reaktanz des Versorgungsnetzes 2 zwischen dem Netzmesspunkt 10 und dem virtuellen Messpunkt 12. Der Betrag der virtuellen Messspannung $U^*_{act}$ berechnet sich somit nach folgender Gleichung:

$$U^*_{act} = \left| \underline{U}_{act} + \sqrt{3} \cdot (R + jX) \cdot \underline{I} \right| = \sqrt{\left( U_{act} + R \cdot \frac{P_{act}}{U_{act}} + X \cdot \frac{Q_{act}}{U_{act}} \right)^2 + \left( X \cdot \frac{P_{act}}{U_{act}} - R \cdot \frac{Q_{act}}{U_{act}} \right)^2}$$

Die virtuelle Messspannung U*$_{act'}$ berechnet sich somit aus dem Widerstand und der Reaktanz R und X sowie dem Leitungsstrom $\underline{I}$. Der Leitungsstrom $\underline{I}$ kann hierzu auch in Real- und Imaginärteile aufgeteilt werden und lässt sich aus der aktuellen Wirkleistung P$_{act}$, der eingespeisten Blindleistung Q$_{act}$ und der aktuell gemessenen Netzspannung U$_{act}$ berechnen:

$$\mathrm{Re}(\underline{I}) = \frac{P_{act}}{U_{act}} ; \mathrm{Im}(\underline{I}) = \frac{Q_{act}}{U_{act}}$$

Die oben genannte Berechnungsformel zum Berechnen der virtuellen Spannung $\underline{I}$*$_{act}$ geht somit davon aus, dass der Widerstand R und die Reaktanz X nicht 0 sind, sondern kleiner, weil ihre Effekte bei der Berechnung virtuellen Messspannung $\underline{U}$*$_{act}$ kompensiert wird.

Für die aktuelle Berechnung können die Werte, insbesondere die Parameter für den Widerstand R und die Reaktanz X normiert verwendet werden. Als Bezugsgröße oder Basisgröße zur Normierung kann bspw. die Impedanz Z$_{Base}$ zugrundegelegt werden, die sich aus der Nennspannung U$_{rat}$ und der einzuspeisenden Nennwirkleistung P$_{rat}$ nach der folgenden Formel berechnen:

$$Z_{Base} = \frac{U_{rat}^2}{P_{rat}} .$$

Die virtuelle Messspannung $\underline{U}$*$_{act}$ lässt sich somit für den virtuellen Messpunkt 12 bestimmen.

Gemäß einer anderen Ausführungsform wird vorgeschlagen, dass der virtuelle Messpunkt 12 in dem Trafo 6 liegt. Eine Berechnung der virtuellen Messspannung $\underline{U}$*$_{act}$ lässt sich dann sinngemäß wie oben für den virtuellen Messpunkt 12 im Versorgungsnetz 2 durchführen, wobei der Widerstand R' und die Reaktanz X' für den entsprechenden Teil, also den entsprechenden Windungsteil, des Transformators 6 verwendet werden muss.

Die Werte für den Widerstand R bzw. R' und die Reaktanz X bzw. X' können durch Messungen ermittelt werden oder aus Kenntnis der zugrundeliegenden Topologie bestimmt werden. Auch eine Berechnung aus Messwerten kommt in Betracht, insbesondere für einen virtuellen Messpunkt in dem Transformator.

Figur 5 veranschaulicht die Bestimmung der virtuellen Messspannung U$_{VIRT}$ anhand eines Funktionsblocks 50. Dieser Funktionsblock 50 benötigt als Eingangsparameter den entsprechenden Widerstand R und die entsprechende Reaktanz X und als Messwerte für den Referenzpunkt bzw. den Messpunkt die aktuell eingespeiste Blindleistung Q, die aktuell eingespeiste Wirkleistung P und die aktuell anliegende Spannung U. Allgemein ausgedrückt ist dann die virtuelle Messspannung U$_{VIRT}$ eine Funktion dieser beiden Parameter und dieser drei Messwerte:

$$U_{VIRT} = f(R, X, P, Q, U).$$

Die hierdurch berechnete virtuelle Spannung U$_{VIRT}$ kann als IST-Wert für eine Spannungsregelung verwendet werden, die eine Referenzspannung U$_{ref}$ als Sollwert erhält und daraus eine Stellgröße berechnet, nämlich insbesondere einen einzuspeisenden Blindstrom.

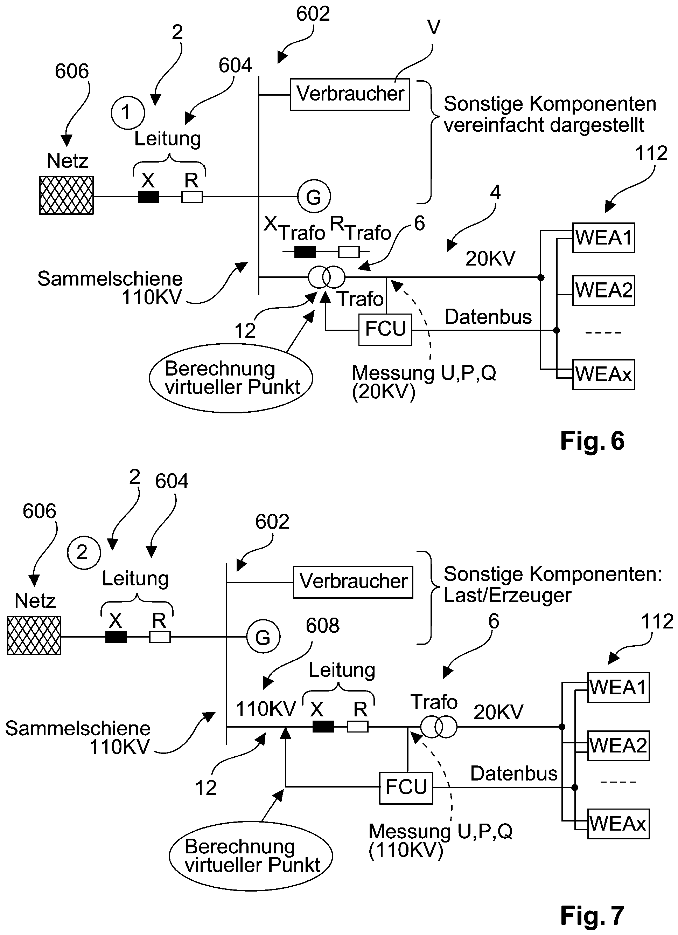

Die Figuren 6 bis 8 zeigen unterschiedliche Konstellationen für die Windparkanbindung einschließlich der vorgeschlagenen virtuellen Spannungsmessung. Gemäß Figur 6 misst eine zentrale Parksteuerung FCU in dem Verbindungsnetz 4 aus Sicht des Windparks 112 vor dem Transformator 6. Der virtuelle Messpunkt 12 liegt hier in dem Transformator 6. Auch der Transformator kann für die Berechnung der virtuellen Spannung im Wesentlichen durch das angedeutete Ersatzschaltbild von der Reihenschaltung des induktiven Anteils X$_{Trafo}$ und des ohmschen Anteils R$_{Trafo}$ beschrieben werden.

Bei der gezeigten Konstellation ist besonders ein lokaler Abschnitt 602 des elektrischen Versorgungsnetzes 2 von Bedeutung, der schematisch einen Generator G und einen Verbraucher V aufweist, die repräsentativ für diverse Komponenten gezeigt sind. Der lokale Abschnitt 602 ist schließlich über eine Leitung 604 mit einem übrigen Abschnitt 606 des Versorgungsnetzes 2 verbunden.

Der Aufbau gemäß Figur 7 entspricht dem der Figur 6, wobei der virtuelle Messpunkt 12 in den Bereich einer Verbindungsleitung 608 gelegt ist, die zwischen dem Transformator 6 und dem lokalen Abschnitt 602 des elektrischen Versorgungsnetzes 2 liegt. Hier ist die Verbindungsleitung 608 dominant, zumindest nicht vernachlässigbar, so dass hier der virtuelle Messpunkt 12 wie dargestellt gewählt werden kann. Die Messung mittels der Parksteuerung FCU erfolgt, bezogen auf den Windpark 112, hinter dem Transformator 6.

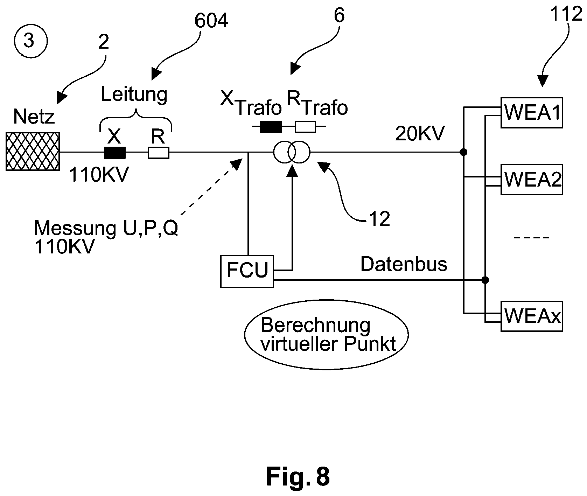

Gemäß der Konstellation der Figur 8 ist kein lokaler Abschnitt 602 vorgesehen, zumindest nicht als wichtig dargestellt. Der virtuelle Messpunkt 12 ist hier in den Transformator 6 gelegt und die Messung erfolgt mittels der Parksteuerung FCU, aus Sicht des Windparks 112, hinter dem Transformator 6 und vor einer Leitung 604, die eine Verbindung zum Versorgungsnetz 2 bzw. zum übrigen oder weiter entfernten Abschnitt 606 des Versorgungsnetzes 2 bildet.

Die Figuren 6 bis 8 machen somit deutlich, dass der virtuelle Messpunkt je nach konkret vorliegender Topologie in den Transformator gelegt werden kann oder an eine Position einer Leitung gelegt werden kann. Außerdem kann die tatsächliche Messung, bezogen auf den Windpark, vor oder nach dem Transformator erfolgen. In jedem Fall wird die virtuelle Spannung basierend auf einer Messung berechnet, wobei insbesondere ein eingespeister Strom für diese Berechnung, insbesondere Blindstrom, berücksichtigt wird.

Somit wird vorgeschlagen, mit Hilfe einer Kompensation eines Spannungsabfalls an einer Zuleitung und/oder anderen Bauelementen im Netz eine virtuelle Spannung im Versorgungsnetz zu berechnen. Insbesondere wird gemäß einer Ausführung vorgeschlagen, auf diese Art und Weise eine virtuelle Spannung in einem Transformator zu berechnen. Der Vorteil liegt darin, dass eine entsprechende Entkopplung der eigentlichen Spannungsmessung stattfindet.

Die Kompensation benötigt für die Berechnung eine Angabe des Widerstandes und der Reaktanz, die kompensiert werden soll. Des Weiteren gehen die Messgrößen von der jeweiligen Messstelle mit ein. Das Ergebnis ist die Spannung am virtuellen Messpunkt. Auf diese Stelle wird dann geregelt, also insbesondere die Regelung der Einspeisung einschließlich etwaiger netzstützender Maßnahmen basiert auf dieser Spannung an dem virtuellen Punkt bzw. dieser virtuellen Spannung.

Es wird somit eine Lösung vorgeschlagen, bei der die Spannungsmessung entkoppelt wird. Die Netzspannung vom Windpark wird nicht nur durch eben diesen Windpark beeinflusst, sondern kann auch durch andere Erzeuger oder Verbraucher beeinflusst werden, die am selben oder in der Nähe liegenden Netzpunkt verbunden sind.

Wenn in dieser Situation mehrere Einheiten, also insbesondere mehrere Windparks, auf diesen Netzpunkt eine Spannungsregelung durchführen, insbesondere mit einem PI- oder PID-Regler, kann dies zu einer regelungstechnischen Instabilität führen. Das kann dadurch bedingt sein, dass jede dieser Einheiten eine kleine abweichende Netzspannung misst. Diese Abweichung kann durch die Toleranzen der Messung bedingt sein, die wiederum abhängig von dem jeweiligen Messgerät, von unterschiedlichen Messverfahren oder von Wandlerkernen mit Toleranzen abhängen kann, um nur einige Beispiele zu nennen.

Versucht nun jeder Regler, also der jeweilige Regler der Einheiten, auf diese Spannung zu regeln, kann es zu Problemen kommen, die insbesondere durch den integralen Anteil (I-Anteil) bedingt sind. Jede noch so kleine Abweichung wird durch den integralen Anteil früher oder später zu einem signifikanten Wert aufintegriert werden.

Um dieses Problem zu adressieren, wird insbesondere vorgeschlagen, die gemessene Netzspannung jeweils in irgendeiner geeigneten Form zu entkoppeln und dazu wird erfindungsgemäß die Verwendung eines virtuellen Messpunktes vorgeschlagen. Die Berechnung des virtuellen Messpunktes, also die Spannung in dem virtuellen Messpunkt, erfolgt durch elektrotechnische Berechnung einer Leitung oder eines Transformators. Es wird dabei von diesem Bauelemente, also der Leitung oder des Transformators von ohmschen-induktiven Komponente ausgegangen. Die entsprechende Formel ist bereits oben als Berechnung für die virtuelle Messspannung $U^*_{act}$ angegeben worden.

Es wird nun durch die Verwendung des virtuellen Messpunktes, also die darauf berechnete Spannung, nicht mehr die tatsächliche Spannungsmessung als Ist-Wert für die Regelung verwendet, sondern die Addition der Ist-Spannung und des Spannungsabfalls der ohmschen-induktiven Komponente, also des Transformators bzw. der Leitung. Dieser Spannungsabfall berechnet sich entsprechend aus den Parametern für R und X aus dem eingespeisten Strom I des Windparks, also aus dem Strom, der durch die entsprechende Komponente fließt.

Wird jetzt durch die Spannungsregelung ein größerer Blindstrom eingespeist, um dies als Beispiel zu nennen, hat das Einfluss auf die Ist-Spannung und zugleich auf den Spannungsabfall über der Leitung bzw. dem Transformator. Die reale Ist-Spannungsmessung wird hierdurch zum Teil entkoppelt.

Die virtuelle Spannung ist somit eine Funktion, die von den Werten Uist, Pist und Qist abhängt. Mit dieser umgerechneten (virtuellen) Spannung kann jetzt insbesondere ein PI-Spannungsregler verwendet werden.

**Patentansprüche**

**1.** Verfahren zum Einspeisen elektrischer Leistung (P) mittels eines Windparks (112) in ein elektrisches Versorgungsnetz (2), wobei

- der Windpark (112) von einem ersten Verbindungsnetz (4) über einen Transformator (6) in das elektrische Versorgungsnetz (2) einspeist und das erste Verbindungsnetz (4) eine Verbindungsnetzspannung und das elektrische Versorgungsnetz (2) eine Versorgungsnetzspannung aufweist, **dadurch gekennzeichnet, dass**
- das Einspeisen in Abhängigkeit einer virtuellen Messspannung ($U_{VIRT}$) erfolgt und
- als virtuelle Messspannung ($U_{VIRT}$) eine Spannung eines virtuellen Messpunktes (12) berechnet wird.

2.  Verfahren nach Anspruch 1, **dadurch gekennzeichnet, dass** der virtuelle Messpunkt (12)

- in einer Leitung des elektrischen Versorgungsnetzes (2) liegt,
- in einer Leitung des ersten Verbindungsnetzes (4) liegt oder
- in einer Zuleitung zwischen dem Transformator und dem elektrischen Versorgungsnetz

liegt.

3.  Verfahren nach Anspruch 1, **dadurch gekennzeichnet, dass** der virtuelle Messpunkt (12)

- in dem Transformator (6) liegt, und/oder
- auf einen vorbestimmten Nennwert gelegt wird, vorzugsweise in einem Bereich von etwa 20kV.

4.  Verfahren nach einem der vorstehenden Ansprüche, **dadurch gekennzeichnet, dass**

- die Versorgungsnetzspannung eine Hochspannung ist, insbesondere etwa 110kV beträgt und/oder
- die Verbindungsnetzspannung eine Mittelspannung ist, insbesondere etwa 20kV beträgt.

5.  Verfahren nach einem der vorstehenden Ansprüche,
    **dadurch gekennzeichnet, dass**
    die virtuelle Messspannung ($U_{VIRT}$) am virtuellen Messpunkt (12) aus

- der Verbindungsnetzspannung,
- einem Strom des Transformators ($\underline{I}$),
- der momentan eingespeisten Leistung (P) und/oder
- einer momentan eingespeisten Blindleistung (Q)

berechnet wird und/oder dass die Berechnung in Abhängigkeit

- eines Widerstands (R) und/oder
- einer Reaktanz (X)

des Transformators (6) oder eines Teils davon und/oder einer Leitung zwischen einem tatsächlichen Messpunkt (10) und dem virtuellen Messpunkt (12) vorgenommen wird.

6.  Verfahren nach einem der vorstehenden Ansprüche,
    **dadurch gekennzeichnet, dass**

- der virtuelle Messpunkt (12) in dem Transformator (6) angeordnet ist,
- an dem virtuellen Messpunkt ein Teil der Windungen des Transformators (6) wirksam ist und sich die elektrotechnische Position des Messpunktes durch das Verhältnis der Anzahl dieser wirksamen Windungen zur Gesamtanzahl der Windungen des Transformators (6) definiert,
- zur Berechnung der virtuellen Spannung ($U_{VIRT}$) an diesen virtuellen Messpunkt als Parameter der Widerstand (R) und die Reaktanz (X) dieser wirksamen Windungen zugrundegelegt wird und
- sich die Werte für diesen Widerstand (R) und diese Reaktanz (X) der wirksamen Windungen aus dem Widerstand und der Reaktanz des gesamten Transformators (6) und dem Verhältnis der Anzahl wirksamer Windungen zur Gesamtanzahl der Windungen des Transformators (6) berechnet.

7.  Verfahren nach einem der vorstehenden Ansprüche,
    **dadurch gekennzeichnet, dass**
    abhängig der virtuellen Messspannung ($U_{VIRT}$)

- die eingespeiste Leistung (P) erhöht oder verringert wird und/oder
- eine eingespeiste Blindleistung (Q) erhöht oder verringert wird.

8. Windpark (112) zum Einspeisen elektrischer Leistung (P) in ein Versorgungsnetz (2), wobei der Windpark (112) dazu vorbereitet ist, das Einspeisen mit einem Verfahren gemäß einem der vorstehenden Ansprüche durchzuführen.

**Claims**

1. Method for feeding electric power (P) into an electric supply grid (2) by means of a wind farm (112), wherein

   - the wind farm (112) feeds into the electric supply grid (2) from a first interconnecting network (4) and via a transformer (6), with the first interconnecting network (4) having a interconnecting network voltage and the electric supply grid (2) having a grid voltage, **characterized in that**
   - feeding is based on a virtual measured voltage ($U_{VIRT}$) and
   - a voltage of a virtual measurement point (12) is calculated as the virtual measured voltage ($U_{VIRT}$).

2. Method according to Claim 1,
   **characterized in that**
   the virtual measurement point (12)

   - lies in a line of the electric supply grid (2),
   - lies in a line of the first interconnecting network (4) or
   - lies in a conductor between the transformer and the electric supply grid.

3. Method according to Claim 1,
   **characterized in that**
   the virtual measurement point (12)

   - lies in the transformer (6) and/or
   - is set to a predetermined rated value, preferably in a range of approx. 20kV.

4. Method according to one of the above claims,
   **characterized in that**

   - the grid voltage is a high voltage, in particular is approx. 110kV and/or
   - the interconnecting network voltage is a medium voltage, in particular is approx. 20kV.

5. Method according to one of the above claims,
   **characterized in that**
   the virtual measured voltage ($U_{VIRT}$) at the virtual measurement point (12) is calculated from

   - the interconnecting network voltage,
   - a current of the transformer (1),
   - the currently fed-in power (P) and/or
   - a currently fed-in reactive power (Q)

   and/or that the calculation is performed based on

   - a resistance (R) and/or
   - a reactance (X)

   of the transformer (6) or part thereof and/or a line between an actual measurement point (10) and the virtual measurement point (12).

6. Method according to one of the above claims,
   **characterized in that**

   - the virtual measurement point (12) is arranged in the transformer (6),
   - one part of the windings of the transformer (6) is active at the virtual measurement point and that the electric position of the measurement point is defined by the ratio of the number of such active windings to the total number of the windings of the transformer (6),
- the resistance (R) and the reactance (X) of such active windings is taken as a parameter to calculate the virtual voltage ($U_{VIRT}$) at this virtual measurement point and
- the values for such resistance (R) and reactance (X) of the active windings are calculated from the resistance and reactance of the overall transformer (6) and from the ratio of the number of active windings to the total number of the windings of the transformer (6).

7. Method according to one of the above claims,
   **characterized in that**

   - the fed-in power (P) is increased or reduced and/or
   - a fed-in reactive power (Q) is increased or reduced based on the virtual measured voltage (U VIRT).

8. Wind farm (112) for feeding electric power (P) into a supply grid (2), wherein the wind farm (112) is prepared for using a method according to one of the above claims for feeding purposes.


**Revendications**

1. Procédé d'injection d'énergie électrique (P) au moyen d'un parc éolien (112) dans un réseau d'alimentation électrique (2), dans lequel

   - le parc éolien (112) est injecté depuis un premier réseau de connexion (4) par le biais d'un transformateur (6) dans le réseau d'alimentation électrique (2) et le premier réseau de connexion (4) comprend une tension de réseau de connexion et le réseau d'alimentation électrique (2) comprend une tension de réseau d'alimentation,
   **caractérisé en ce que**
   - l'injection a lieu en fonction d'une tension de mesure virtuelle ($U_{VIRT}$) et
   - une tension d'un point de mesure virtuel (12) est calculée en tant que tension de mesure virtuelle ($U_{VIRT}$).

2. Procédé selon la revendication 1,
   **caractérisé en ce que**
   le point de mesure virtuel (12)

   - est situé dans une ligne du réseau d'alimentation électrique (2),
   - est situé dans une ligne du premier réseau de connexion (4) ou
   - est situé dans une ligne d'amenée entre le transformateur et le réseau d'alimentation électrique.

3. Procédé selon la revendication 1,
   **caractérisé en ce que**
   le point de mesure virtuel (12)

   - est situé dans le transformateur (6), et/ou
   - est placé sur une valeur nominale prédéfinie, de préférence dans une plage d'environ 20 kV.

4. Procédé selon l'une quelconque des revendications précédentes,
   **caractérisé en ce que**

   - la tension de réseau d'alimentation est une haute tension, en particulier d'environ 110 kV et/ou
   - la tension de réseau de connexion est une tension moyenne, en particulier de 20 kV.

5. Procédé selon l'une quelconque des revendications précédentes,
   **caractérisé en ce que**

   - la tension de mesure virtuelle ($U_{VIRT}$) est calculée au niveau du point de mesure virtuel (12) à partir de
   - la tension de réseau de connexion,
   - un courant du transformateur (I),
   - la puissance momentanément injectée (P) et/ou
   - une puissance réactive momentanément injectée (Q)

et/ou **en ce que** le calcul est réalisé en fonction de

- une résistance (R) et/ou
- une réactance (X)

du transformateur (6) ou d'une partie de celui-ci et/ou d'une ligne entre un point de mesure réel (10) et le point de mesure virtuel (12).

6. Procédé selon l'une quelconque des revendications précédentes,
**caractérisé en ce que**

- le point de mesure virtuel (12) est disposé dans le transformateur (6),
- au niveau du point de mesure virtuel, une partie des enroulements du transformateur (6) est active et la position électrotechnique du point de mesure se définit par le rapport du nombre de ces enroulements actifs sur le nombre total des enroulements du transformateur (6),
- pour le calcul de la tension virtuelle ($U_{VIRT}$) au niveau de ce point de mesure virtuel, la résistance (R) et la réactance (X) de ces enroulements actifs servent de paramètres et
- les valeurs pour cette résistance (R) et pour cette réactance (X) des enroulements actifs se calculent à partir de la résistance et de la réactance de tout le transformateur (6) et du rapport du nombre d'enroulements actifs sur le nombre total d'enroulements du transformateur (6).

7. Procédé selon l'une quelconque des revendications précédentes,
**caractérisé en ce que**
en fonction de la tension de mesure virtuelle ($U_{VIRT}$)

- la puissance injectée (P) est augmentée ou réduite et/ou
- une puissance réactive injectée (Q) est augmentée ou réduite.

8. Parc éolien (112) pour l'injection de puissance électrique (P) dans un réseau d'alimentation (2), dans lequel le parc éolien (112) est préparé pour exécuter l'injection avec un procédé selon l'une quelconque des revendications précédentes.

**Fig. 1**

**Fig. 2**

Fig. 3

Fig. 4

Fig. 5

Fig. 6

Fig. 7

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10490896 B
- DE 102009030725 A1
- EP 1802866 B1
- EP 2551984 A2
- DE 102011081446 A1